# EUROPEAN PATENT SPECIFICATION

(11) **EP 2 620 246 B1**
(45) Date of publication and mention of the grant of the patent: **04.03.2015**
(21) Application number: 13000317.1
(22) Date of filing: 22.01.2013
(51) Int. Cl.: B23D 45/06, B23D 47/02, B27B 5/18, B23Q 11/08

(54) **Working plane for a cutting machine**
Arbeitsfläche für eine Schneidemaschine
Paln de travail pour une machine de coupe

(30) Priority: 24.01.2012 IT BO20120027
(43) Date of publication of application: 31.07.2013
(73) Proprietor: Naldi, Valter, 40137 Bologna (IT)
(72) Inventor: Naldi, Valter, 40137 Bologna (IT)

(56) References cited:
- AT-B- 403 263
- AT-B- 411 449
- DE-U1- 20 009 611
- FR-A- 1 085 826
- US-A- 4 589 641

## Description

The present invention relates to an equipped working table for a cutting machine according to the preamble of claim 1. Such a machine is known from AT 403 263 B.

Moreover, present invention relates to a cutting machine provided with said equipped working table.

As known, cutting machines relating to the present invention comprise a saw carriage, which is horizontally mobile along a guiding base supporting the panels to be cut. On the upper machine part, a robust pressing unit is provided in order to firmly clamp the panels during the cutting operation and to avoid an even minimal movement thereof. This clamping operation, on both sides of the cutting line, is essential to obtain a good quality of cut and a good precision in the sizing of the cut panels.

The saw blade unit, besides having a horizontal translation movement provided by said saw carriage, is also provided with a vertical movement in order to allow both saw blades, usually one cutting blade or circular blade and one scorer, to protrude from the working table only during the cutting operation, when the panels are clamped by the upper pressing system.

During the return stroke of the saw carriage to the initial position, in order to repeat the cutting cycle, the saw blade unit is lowered below the working table, so as to allow the simultaneous panel repositioning that is usually carried out by means of pushing devices (automated and known) provided with panel clamping grippers.

As known, during the cutting operation, off-cuts can be produced, usually during the trimming operation on the four external sides of the panels to be cut, and, if said off-cuts are of small dimensions, they can penetrate through the cutting slot, which is usually a few millimeters wide, into the cutting machine, thus creating considerable malfunctions of the machine itself due to various internal organ failures.

By way of example, in order to solve this problem, patent AT 403 263 B discloses a system for partially closing the cutting slot, which is orthogonal to the cutting direction and operates by moving special closing strips, which are positioned on the working table.

These closing strips are moved during the passage of the saw carriage by means of a relative cam, which is mounted on the saw carriage itself. Therefore, when the saw carriage is moving by, only the special closing strips that are arranged in correspondence to its position are operated, thus preventing them, during the cutting operation, from getting in contact with the saw blades; these closing strips will be immediately re-arranged in the closing position as soon as the saw carriage has moved past them.

Obviously, this movement of the closing strips must occur during the cutting operation and, therefore, with the stack of panels clamped on the upper surface of the working table by means of the upper pressing unit. Obviously, furthermore, these special closing strips must have a thickness that prevents them from being locked and, therefore, their upper profile must necessarily be slightly lower than said upper surface of the working table.

This implies that only a few closing strips can be positioned along the cutting line at more or less regular intervals, since the portion of the working table involved in the firm clamping of the panels must be greatly predominant with respect to the portions of the working table involved in the housing of the special mobile closing strips.

In recently manufactured machines, the movement of the panels is performed by using special clamping grippers whose lower fingers, usually two per each gripper, need grooves on the working table for their passage. It is therefore obvious that these special closing strips cannot be positioned in the immediate vicinity of these grooves and, therefore, the more the panel clamping grippers are used in the panel pushing devices, the less the cutting line closing strips can be used, thus remarkably limiting their final function, which is to prevent thin and short off-cuts from dropping into the cutting slot itself.

Therefore, the main object of the present invention is to provide an equipped working table for a cutting machine and a relative cutting machine comprising said equipped working table, in which the cutting slot closing devices are free from the drawbacks described above.

An equipped working table for a cutting machine according to the invention is defined by the features of independent claim 1. Preferred embodiments are defined by the features of the dependent claims 2-14.

For a better understanding of the present invention, a preferred nonlimiting embodiment of the present invention will now be described by way of example with reference to the accompanying drawings, in which:
- figure 1 shows a plan view of a cutting machine, on which an equipped working table that represents the main subject-matter of the present invention is mounted;
- figure 2 shows a front view of the cutting machine of figure 1;
- figure 3 shows a cross section of the equipped working table, in which a cutting slot closing device assumes a first configuration (opening configuration of the cutting slot);
- figure 4 shows a cross section of figure 3 in which the cutting slot closing device according to figure 3 assumes a second configuration (closing configuration of the cutting slot);
- figure 5 shows a plan view of a portion of an equipped working table provided with a plurality of cutting slot closing devices according to the present invention;
- figure 6 shows a front view of the portion of the equipped working table shown in figure 5;
- figure 7 shows a plan view of a closing device according to the invention;
- figure 8 shows an A-A section of the device of figure 7 with parts removed for a better comprehension of the accompanying drawings;
- figure 9 shows a plan view of a detail of the closing device according to figures 7, 8; and
- figure 10 shows three different configurations of the closing device according to figures 7, 8, 9; in particular:
- figure 10A shows a first configuration in which the closing member is arranged in a retracted position to allow the passage of the scoring and cutting blade, which are performing a cutting operation on a stack of panels and are arranged in direct correspondence to the closing member itself;
- figure 10B shows a second configuration, in which the closing member is arranged in an extracted position and closes the cutting slot; in this case the saw blades do not interfere with the closing member itself; and finally
- figure 10C shows a third configuration, in which the saw carriage is performing its return stroke and is arranged in direct correspondence to the closing device; in this case the closing member continues to be in its extracted position, since, during said return stroke, the saw blades are lowered and, therefore, cannot interfere with the closing member.

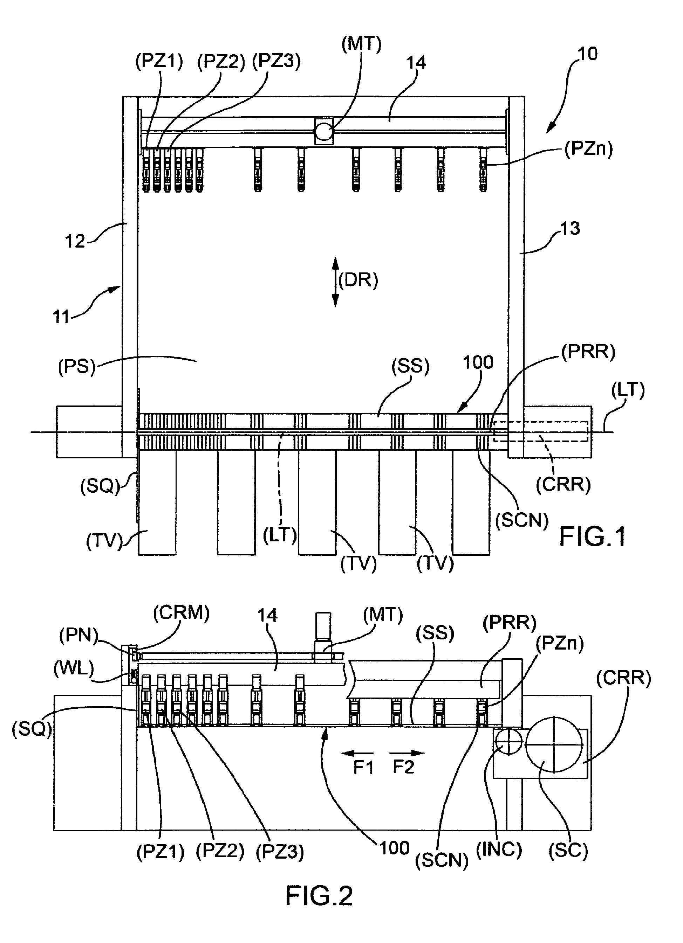

In figures 1, 2, number 10 indicates, as a whole, a cutting machine that is the subject-matter of the present invention. An equipped working table 100 is mounted on said cutting machine 10.

The cutting machine 10 comprises a support structure 11, said working table 100 and a saw blade carriage (CRR), the latter being provided, as usual, with a scorer (INC), which is not essential, and with a circular blade (SC). Said saw blades (INC, SC) project from an upper surface (SS) of the working table 100 only during the cutting operation, which is performed according to a direction represented by arrow F1 (figure 2), when the stack of panels (not shown) is pressed by a pressing unit (PRR) acting on both sides of a cutting line (LT) against the upper surface (SS) of the equipped working table 100.

For the purpose of the present invention, the "upper surface (SS) of the equipped working table 100" is the surface of the table itself and, therefore, the surface of each one of its components that is physically in contact with the lower face of a single panel or of the stack of panels to be cut and that also constitutes its support during the pressing action of the pressing unit (PRR).

Said pressing unit (PRR) performs its active pressing action, by clamping the panel or the stack of panels, over the entire length of the equipped working table 100.

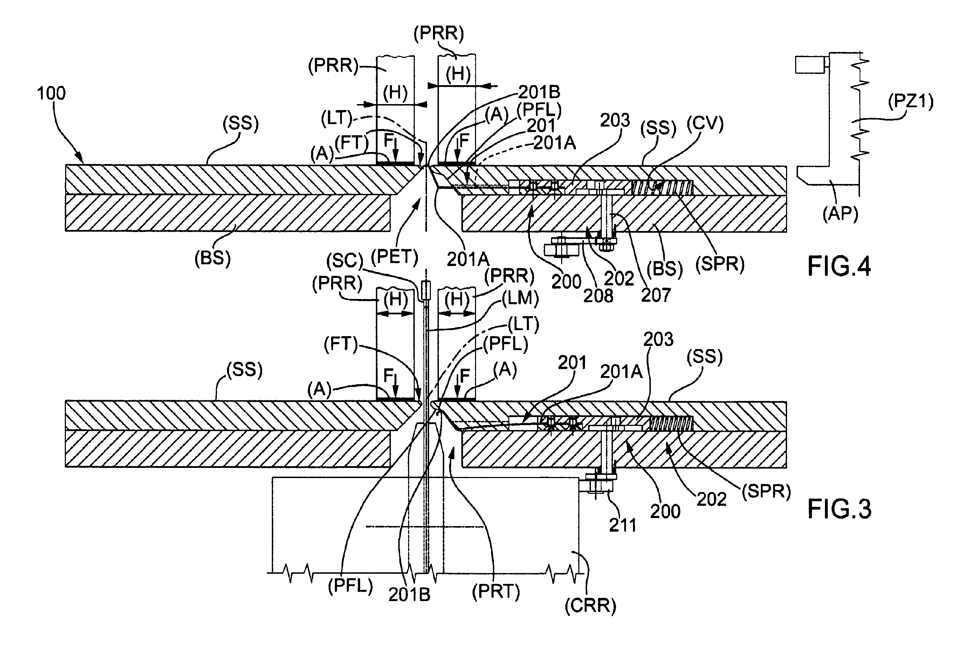

The pressing unit (PRR), therefore, exerts a clamping force (F) (figures 3, 4) by means of two vertical plates having a given width (H), each one placed on each side of the saw blades (INC), (SC) (figures 1, 2, 3, 4).

The panel clamping force (F), having a value of some hundreds kg, is exerted by the pressing unit (PRR) over an area (A) of the upper surface (SS) belonging to the equipped working table 100 (figures 3, 4).

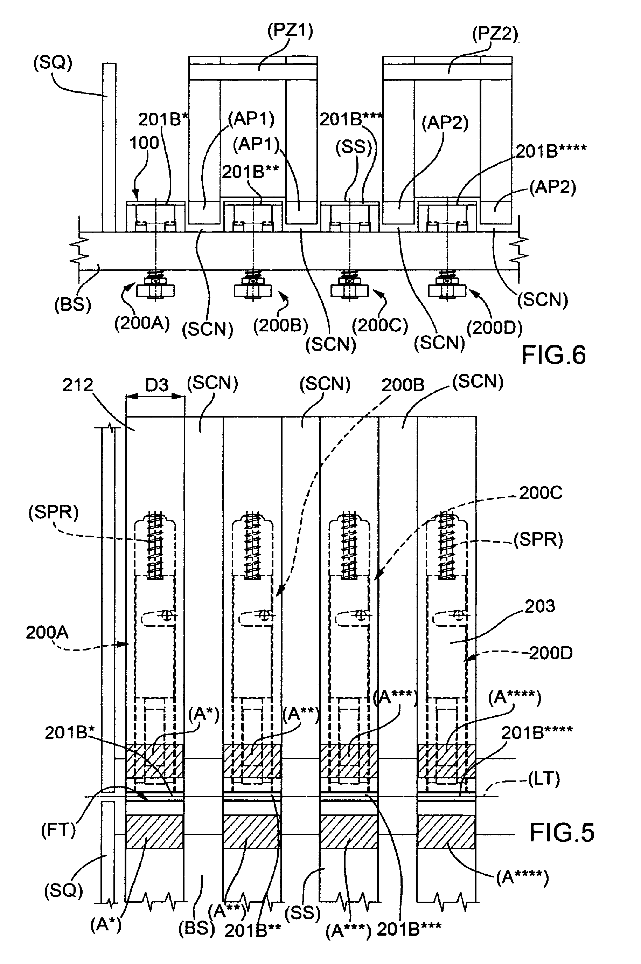

Or in better terms, as shown in figure 5, said clamping force (F) is also exerted on a plurality of areas (A*), (A**), (A***), (A****) of the upper surface (SS) belonging to the equipped working table 100 (figures 5, 6), which are adjacent to a cutting slot (FT) lying over the cutting line (LT). In particular, each single area (A*), (A**), (A***), (A****) is contained in a part of the upper surface (SS) of a portion of the equipped working table 100 having, for example, the shape of a strip 212.

Moreover, said clamping force (F) does not cause any deformation of the equipped working table 100, since each member of said working table 100 is duly dimensioned during the design phase.

During the return stroke of the saw carriage (CRR), according to a direction represented by an arrow (F2) (figure 2), to the initial position in order to repeat the cutting cycle, said saw blades (INC, SC) are lowered below the upper surface (SS) by means of known means, which are not shown.

The support structure 11 comprises two lateral supports 12, 13, which support the wheels (WL) (only one is visible in figure 2) of a cross pusher carriage 14, which is suited to position the panels to be cut (not shown) and bears a plurality of grippers (PZ1), (PZ2), (PZ3),... (PZn), which are distributed along the pusher carriage 14 itself.

In particular it should be noted that, with reference to figures 5, 6, the grippers (PZ1), (PZ2) are arranged side by side without discontinuity in the area next to a square fence (SQ). This is necessary due to the fact that, in this area of the cutting machine 10, panel strips (not shown), which can be very narrow, are cut crosswise and, therefore, need a plurality of grippers close to each other in order to be simultaneously moved and cut. Moreover, it must be noted that each gripper (PZ1), (PZ2) is respectively provided with two lower jaws (AP1), (AP2).

The cross pusher carriage 14, which is supported by wheels (WL), is provided with a central drive motor (MT), which causes lateral pinions (PN) (only one is visible in figure 2) to rotate, each one of said lateral pinions (PN) being engaged with a respective rack (CRM) (figure 2). The rotation of the pinions (PN) allows the entire cross pusher carriage 14 to move according to the two directions indicated by a double-headed arrow (DR). This allows the stack of panels to move on the upper surface (SS) to and from a transverse cutting line (LT), which is associated to the cutting slot (FT), along which the scorer (INC) and the circular blade (SC) run during the active cutting phase.

The cutting machine 10 is also provided with projecting tables (TV), a support table (PS) and the lateral square fence (SQ).

The working table 100 (as well as the support table (PS)), as mentioned above, is provided with a series of grooves (SCN), which allow the passage of respective grippers (PZ1), (PZ2), (PZ3), ... (PZn) (see also figure 6).

In a known manner and with reference to figures 3, 4, the equipped working table 100 comprises, as already mentioned, the upper surface (SS) supporting the stack of panels (not shown). Said upper surface (SS) is divided into two portions by the theoretical cutting line (LT), which corresponds to the central axis (LM) of the circular blade (SC) (figure 3) and to the central axis (not shown) of the scorer (INC). Actually, the cutting line (LT) is surrounded by the cutting slot (FT), which is a few millimeters wide and takes into account the actual thickness of the saw blades.

The equipped working table 100 is fixed to a support base (BS) with known means, which are not shown.

The continuity of said equipped working table 100 is interrupted by the grooves (SCN) for the passage of the lower jaws (AP), (AP1), (AP2) of the grippers (figures 1, 2, 5, 6). In particular, it should be pointed out that, due to the grooves (SCN), the equipped working table 100, in the area next to the square fence (SQ), generally consists of narrow support surfaces, which are shaped as narrow strips that are orthogonal to the cutting line (LT), alternated in close sequence with the series of grooves (SCN). The grooves (SCN) on the working table can also be used to house different devices that are necessary for the operation of the cutting machine.

The equipped working table 100 comprises at least one closing device 200 for closing the cutting slot (FT).

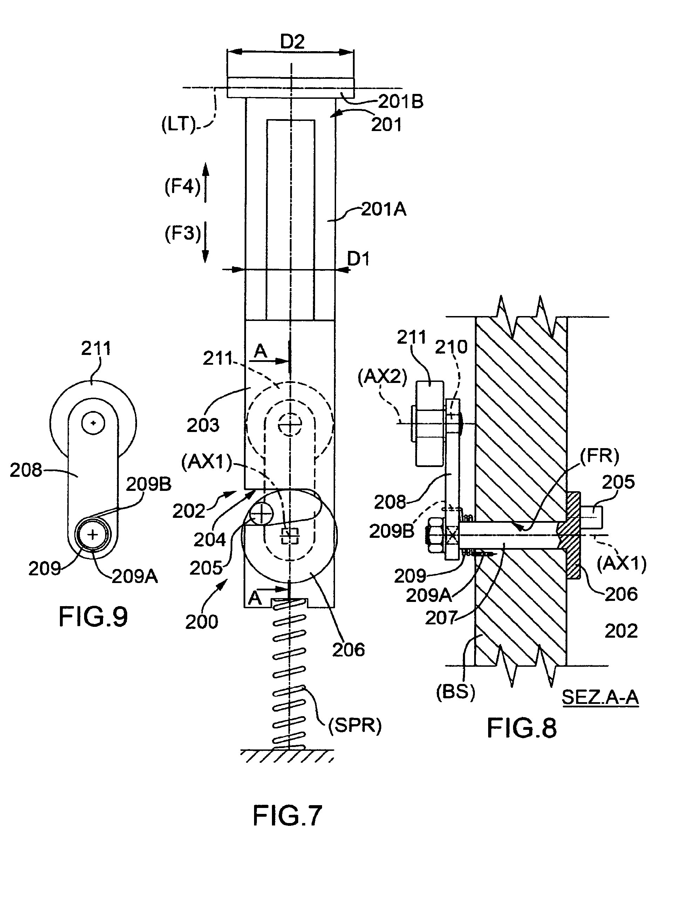

As shown in detail in figure 7, the closing device 200 comprises a closing member 201 for closing the cutting slot (FT) and an actuating device 202 for actuating the closing member 201 itself.

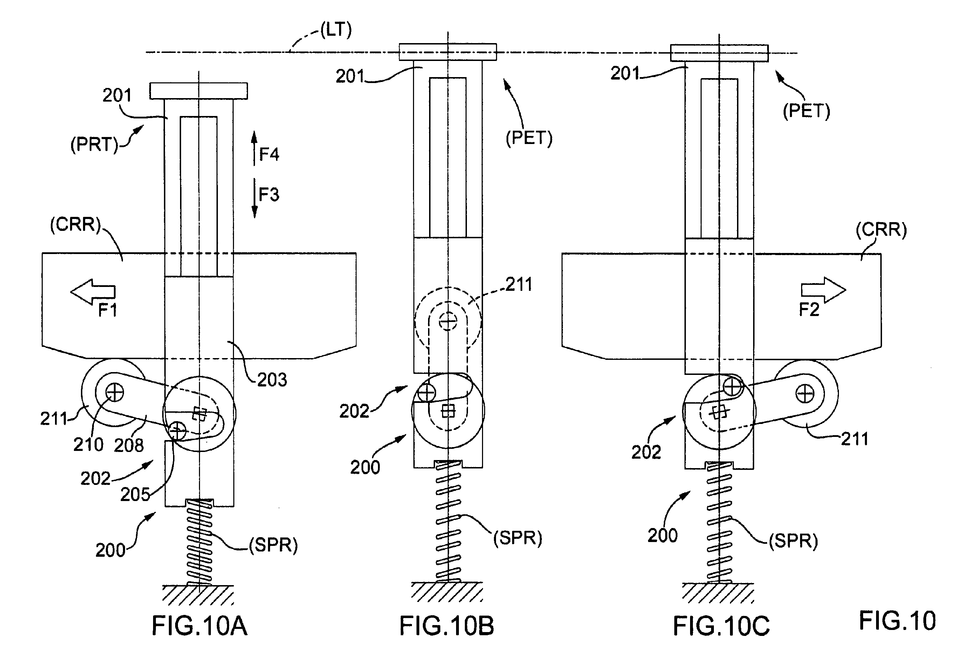

As also shown in figure 10, the actuating device 202 is suited to cause the closing member 201 to cover a substantially straight path according to the two directions represented by arrows F3, F4, thus causing it to move from a retracted position (PRT) (figures 3, 10A) to an extracted position (PET) (figures 4, 5, 7, 10B, 10C), and vice versa.

Figure 7 shows that the closing member 201 advantageously comprises a main body 201A with width D1, which is associated to a head 201B, which is suited to close the cutting slot (FT) with width D2.

Incidentally, it should be pointed out that, for the purpose of the present invention, the "head 201B" is the end portion of the closing member 201, which is suited to physically close the cutting slot (FT) (figures 4, 5). Moreover, the head 201 B faces the cutting line (LT).

Advantageously, but not necessarily, the width D2 of the head 201B is larger than the width D1 of the main body 201A, or, if necessary, it is larger than the entire closing device 200, so that said head 201B can close a longer section of the cutting slot (FT).

The closing member 201 can be made of a deformable elastic foil, using, for example, spring steel.

In the embodiment shown in figures 3, 4, 5, the entire actuating device 202 and at least part of the closing member 201 are arranged in a slot (CV), which is obtained in a known manner between the upper surface (SS) of the equipped working table 100 and a base (BS), for example on the inside of the special strip 212 having width (D3), which is arranged between two adjacent grooves (SCN) eventually housing the lower jaws (AP1), (AP2) that are respectively relative to the same gripper (PZ1), (PZ2). The head 201B of the closing member 201 could advantageously have a width D2 that is equal or, if necessary, even larger than the width D3 of the special strip 212, which could house the closing member 201 or the entire closing device 200.

The special strip 212 having width (D3), which is part of the equipped working table 100 and, therefore, has the same upper surface (SS), can be individually fixed to the base (BS) or can be contained in a portion of the equipped working table 100 that is fixed to base (BS). In the latter case, a plurality of strips 212 having width (D3) can be comprised in the same working table portion that is fixed to the base (BS).

When the head 201B of the closing member 201 is arranged in the retracted position (PRT) (figure 3), it is covered by the upper surface (SS) of the equipped working table 100. It should be pointed out that, when the head 201 B of the closing member 201 is arranged in its retracted position (PRT), it could also be only partially covered by the upper surface (SS) of the equipped working table 100, without for this reason going beyond the scope of protection of the present invention, since all the advantages of the present solution would still be valid. In other words, said upper surface (SS) of the equipped working table 100 supporting the panel or the stack of panels could be completely or only partially arranged over the head 201B of said closing member 201 when the closing member 201 itself is arranged in a retracted position (PRT).

Moreover, when the closing member 201 is arranged in the retracted position (PRT) (figure 3), there is no portion of the closing member 201 itself that could come in contact, even accidentally, with a panel, with a stack of panels, with a gripper and, evidently, with the scorer (INC) or the circular blade (SC).

As shown in figures 3, 4, the edge of the equipped working table 100 and, therefore, the edge belonging to the special strip 212 arranged in correspondence to the slot (CV), can be advantageously shaped as a guiding profile (PFL), which, in use, is coupled to the head 201B of the closing member 201.

When the actuating device 202 pushes the entire closing member 201 forward, the head 201B of the closing member 201 itself, following the guiding profile (PFL), closes its portion of the cutting slot (FT), thus substantially reaching the same level as the upper surface (SS) of the equipped working table 100 (figure 4). The adhesion of the head 201B to the profile (PFL) is always guaranteed by the elasticity of the foil of which closing member 201 is made.

In other words, the head 201B follows a path comprising a first horizontal section followed by a second raising section, so as to close a corresponding portion of the cutting slot (FT), substantially reaching the same level as the upper surface (SS) of the equipped working table 100.

In a further embodiment (not shown), the closing member may be rigid instead of being elastic. In this case the head of the closing member or, in any case, the final portion of the closing member, which is suited to physically close the cutting slot, in order to reach the same level as the upper surface of the equipped working table, has to be provided with kinematic motions with cams or levers. As an alternative, in the absence of said kinematic motions, the head of the closing member or, in any case, the final portion of the closing member, which is suited to physically close the cutting slot, will be arranged, in its extracted position, slightly below the upper surface of the equipped working table 100.

In the alternative solutions suggested, the closing device 200 (or, if necessary, the sole closing member 201) can in any case be partially or completely housed and/or guided in the special strip 212 with the upper surface (SS), which is interposed between two adjacent grooves, which, if necessary, can be provided for the same gripper.

As shown in figures 3, 4, 5, 7, 10, the actuating device 202 comprises, in turn, a sliding cursor 203, which, by means of known means, is caused to be integral to the closing member 201. Said sliding cursor 203 is pushed by a spring (SPR) presenting an end that rests against a side wall of the slot (CV), and is provided with a profiled slot 204, in which a pin 205 is engaged, which, in turn, is integral to a disc 206 (figures 7, 8). The disc 206 is fitted to a shaft 207 with a fixed axis (AX1), which is at least partially contained, in a through hole (FR) obtained in base (BS).

As explained in detail below, the shaft 207 can rotate about the fixed axis (AX1) in such a way that the disc 206 and the pin 205 rotate in same direction as well, thus forcing the sliding cursor 203 to move according to an arrow (F3) (figure 10A). In other words, the rotating movement of the pin 206 is converted into the linear movement of the sliding cursor 203 and of the closing member 201.

As shown in particular in figures 3, 4, 8, a link rod 208, which is integral to the shaft 207, is provided below the base (BS), one end of said link rod 208 being subject to the action of a spring 209, which is partially wound around the shaft 207. A first end 209A of the spring 209 is integral to the base (BS), while a second end 209B thereof is fixed to the link rod 208. At the opposite end of the link rod 208, which is not integral to the shaft 207, there is a pin 210, which can freely rotate about an axis (AX2), to which a roller 211 is fixed, which, therefore, is also able to freely rotate about the axis (AX2).

As shown in figures 3, 10A, 10C, said roller 211 can come in contact with the saw carriage (CRR) or, in a further embodiment not shown in the figures, with a cam with a proper length, which is fixed to the saw carriage (CRR) itself, both during the cutting stroke (figure 10A) and during the return stroke (figure 10C).

With reference to figure 10A, when the pin 205 pushes the sliding cursor 203 in the direction represented by arrow F3, the spring (SPR) is loaded. Therefore, in the configuration shown in figure 10A, the closing member 201 is arranged in its retracted position and moves aside from the cutting slot (FT), thus allowing the passage of the scorer (INC) and of the circular blade (SC).

When the closing member 201 is arranged in this position, the scorer (INC) and the circular blade (SC) can respectively perform, in correspondence to that particular closing member 201, the scoring and cutting operation on the stack of panels (not shown), which is arranged on top of the cutting slot (FT).

Once the saw carriage (CRR) has passed by (figure 10B), there is no more contact between the roller 211 and the saw carriage (CRR).

For this reason, due to the action of the spring (SPR) in the direction indicated by arrow (F4), the device assumes the configuration shown in figure 10B, that is with the closing member 201 in the extracted position (PET).

During the return stroke of the saw carriage (CRR), with the saw blades lowered and according to a direction represented by arrow (F2), the roller 211 comes again in contact with the saw carriage (CRR) itself, but, in this case, the pin 205 rotates in an idle manner in the profiled slot 204, thus leaving the position of the sliding cursor 203 and, therefore, of the closing member 201 (which closes the cutting slot (FT)) unchanged. In this third configuration of figure 10C, the loading of the spring 209 takes place as well.

As soon as the saw carriage (CRR) has moved beyond the specific closing member 201, the roller 211 gets back to the position shown in figure 10B thanks to the action of the spring 209. Therefore, as shown in the figures, the specific closing member 201 is arranged in its retracted position (PRT) only when the two following conditions are simultaneously met:
f1) the scorer (INC) and the circular blade (SC) are cutting the stack of panels; and
f2) the scorer (INC) and the circular blade (SC) are arranged exactly in correspondence to that specific closing member 201 (figure 10A).

Moreover, the same closing member 201 is arranged in its extracted position (PET) in all the other situations that have not been considered in the previous paragraph.

In particular, the saw carriage (CRR) can immediately perform its return stroke, even if the off-cuts have not been previously removed from the upper surface (SS) of the equipped working table 100 and, more in particular, from their possible position on top of the cutting slot (FT), since the closing members 201 thereof remain in any case in the extracted position (PET).

The idle actuating device described above for the return stroke of the saw carriage is definitely functional for all those cutting machines, in which there is provided a fixed starting position of the saw carriage itself during the cutting phase.

An alternative to the idle actuating device described above for the return stroke of the saw carriage (not shown) is represented by a mobile cam with a proper length, which is fixed to the saw carriage (CRR) and can assume two positions:
- a first extracted position, which is activated only during the cutting phase and in which said mobile cam comes in contact with an actuating roller in order to place a closing member in a retracted position; and
- a second rest and retracted position, which is activated during the return stroke of the saw carriage and in which said mobile cam does not come in contact with said actuating roller, thus leaving the closing member in the extracted position.

As shown in figures 5, 6, the equipped working table 100, in the case in point, the one near the square fence (SQ), can be provided with a plurality of closing devices 200A, 200B, 200C, 200D, which are activated in sequence as a function of the passage of the saw carriage (CRR), only when the two above-mentioned conditions listed under f1 and f2 are simultaneously met.

Moreover, said figures 5, 6 show that the closing devices 200A, 200B, 200C, 200D can be arranged between several grooves placed in close sequence, so as to allow the installation of several grippers (PZ1, PZ2) in the area immediately next to the square fence (SQ). This is possible thanks to the fact that the closing devices 200A, 200B, 200C, 200D can coexists with the upper surface (SS) of the working table 100 or, in any case and more in particular, also with a portion of the upper surface (SS) of the strips (212), which is substantially affected by the pressing action exerted by the pressing unit (PRR) and acts as an indispensable support for the panels during the cutting phase.

Actually, also the heads 201 B*, 201 B**, 201 B***, 201 B**** of the closing members or, in any case, the mobile end portions of the devices suited to close the cutting slot (FT) can coexists, along the equipped working table 100, with the corresponding areas (A*), (A**), (A***), (A****) of the upper surface (SS) of the special strips 212, which are substantially affected by the pressing force of the pressing unit (PRR), since they do not interfere with one another (figure 5).

According to a further embodiment (not shown) of the present invention, the closing member substantially remains unchanged with respect to the previous embodiments, while the actuating device, instead of being completely mechanical (as in the first embodiment described with reference to figures 1-10), comprises electro-pneumatic actuators (electronically activated as a function of the position and of the cycle phase of the saw carriage (CRR)), which directly act according to the directions represented by arrows F3, F4, though keeping the same operative conditions as described above.

A variation on the embodiment described above (not shown) involves electro-pneumatic actuators, which act, according to the directions represented by arrows F1, F2, on a mechanism, which is able to change this movement into a movement according to the directions represented by arrows F3, F4.

Moreover, in these last embodiments, the features concerning the positioning of the head of the closing member (in its retracted position) with respect to the upper surface of the equipped working table remain unchanged.

The main advantages of the equipped working table described above are as follow:
- the different closing devices can be arranged in any position along the cutting line and, therefore, also directly on the sides of several grooves provided for the grippers suited to clamp the panels, thus solving the problems caused by short off-cuts falling into the cutting machine;
- the width of the head of the cutting slot closing device can be wider than the body of the closing device itself, the relative actuating device or the special strip housing the entire closing device, thus requiring fewer closing devices or, in any case, determining a larger closure of the cutting slot itself.
- the upper surface of the working table is completely uniform so as to offer a perfect support immediately next to the cutting slot itself and guarantees an optimal panel clamping during cutting operation, thus ensuring a perfect cutting quality and a precise sizing of the cut panels.
- the actuating device for actuating the cutting slot closing member is not sensitive to dust, since it is completely arranged on the inside and below the upper surface of the working table.
- the system guarantees a faster and safer working cycle of the cutting machine, since the return stroke of the saw carriage is performed with the closing devices in the extracted position, thus eliminating the need to remove possible off-cuts fallen on top of the cutting slot before the saw carriage starts itself its return stroke; and
- the system is easy to be manufactured and to be installed on existing machines, since, in its version with mechanical actuation, it does not require any electronic connection in order to detect the position of the saw carriage in relation to the cutting slot closing devices.

## Claims

1. An equipped working table (100) for a cutting machine (10); the equipped working table (100) comprising:
- an upper surface (SS) supporting at least one panel; and
- at least one closing device (200), (200A), (200B), (200C), (200D) of a cutting slot (FT); said at least one closing device (200), (200A), (200B), (200C), (200D) of the cutting slot (FT) comprising a closing member (201) of said cutting slot (FT) and actuating means (202) of said closing member (201); said closing member (201) being orthogonal to the cutting slot (FT) itself and being able to be positioned in a retracted terminal position (PRT), in which said cutting slot (FT) in correspondence to said closing member (201) remains open, and in an extracted terminal position (PET), in which said cutting slot (FT) in correspondence to said closing member (201) is closed by said closing member (201) itself; and
a head (201 B), (201B*), (201B**), (201B***), (201B****) associated to said closing member (201);
the equipped working table (100) being **characterized in that** said upper surface (SS) supporting a panel or a stack of panels is at least partially arranged over said head (201 B), (201B*), (201B**), (201B***), (201B****) of said closing member (201) when said closing member (201) is located in said retracted terminal position (PRT).

2. An equipped working table (100) according to claim 1, **characterized in that** said upper surface (SS) supporting a panel or a stack of panels is completely arranged over said head (201B), (201B*), (201B**), (201B***), (201B****) of said closing member (201) when said closing member (201) is arranged in said retracted terminal position (PRT).

3. An equipped working table (100) according to any of the preceding claims, **characterized in that** said head (201B), (201B**), (201B***), (201B****) of said closing member (201), when it is arranged in its extracted position (PET), is substantially arranged at the same level as the upper surface (SS) of the equipped working table (100).

4. An equipped working table (100) according to any of the preceding claims, **characterized in that** the closing member (201) is at least partially contained in a slot (CV), which his obtained on the inside of the equipped working table (100) provided with the upper surface (SS).

5. An equipped working table (100) according to claim 4, **characterized in that** the closing member (201) is completely contained in a slot (CV), which is obtained on the inside of the equipped working table (100) provided with the upper surface (SS).

6. An equipped working table (100) according to any of the preceding claims, **characterized in that** the closing member (201) is at least partially contained in a strip (212), which is part of the equipped working table (100) provided with the upper surface (SS).

7. An equipped working table (100) according to claim 6, **characterized in that** the closing member (201) is completely contained in a strip (212), which is part of the equipped working table (100) provided with the upper surface (SS).

8. An equipped working table (100) according to any of the preceding claims, **characterized in that** the width (D2) of the head (201B), (201B**), (201B***), (201B****) of said closing member (201) is wider than the relative main body (201A) or of the relative actuating device (202).

9. An equipped working table (100) according to any of the preceding claims, **characterized in that** the width (D2) of the head (201 B), (201B*), (201 B**), (201 B***), (201 B****) of said closing member (201) is substantially equal or wider than the width (D3) of the strip (212) that houses the relative closing member (201) or the entire closing device (200), (200A), (200B), (200C), (200D).

10. An equipped working table (100) according to any of the preceding claims, **characterized in that** said closing member (201) is made of a deformable elastic foil.

11. An equipped working table (100) according to any of the preceding claims, **characterized in that** said closing member (201) is exclusively activated by mechanical means.

12. An equipped working table (100) according to any of the preceding claims from 1 to 10, **characterized in that** said actuating means (202) comprises electro-pneumatic means.

13. An equipped working table (100) according to any of the preceding claims, **characterized in that** each specific closing member (201) is arranged in its corresponding retracted position (PRT) only when the two following conditions are simultaneously met:
f1) the cutting means (INC, SC) are cutting a panel or a stack of panels; and
f2) said cutting means (INC, SC) are exactly in correspondence to that specific closing member (201).

14. A cutting machine (10) comprising a saw carriage (CRR) having at least one circular blade (SC), which is to run, during the cutting operation, along a cutting slot (FT), said saw carriage (CRR) sliding along a base for guiding and supporting the panels to be cut; the cutting machine (10) comprising an equipped working table (100) as claimed in any one of the preceding claims.

## Patentansprüche

1. Arbeitstisch (100) mit Ausrüstung für eine Schneidmaschine (10), wobei der ausgerüstete Arbeitstisch (100) aufweist:
- eine obere Fläche (SS), die wenigstens eine Platte trägt; und
- wenigstens eine Verschlussvorrichtung (200), (200A), (200B), (200C), (200D) eines Schneidschlitzes (FT), wobei die wenigstens eine Verschlussvorrichtung (200), (200A), (200B), (200C), (200D) des Schneidschlitzes (FT) ein Verschlusselement (201) des Schneidschlitzes (FT) und Betätigungsmittel (202) des Verschlusselements (201) aufweist, wobei das Verschlusselement (210) senkrecht zu dem Schneidschlitz (FT) selbst ist und in einer zurückgezogenen Endposition (PRT) positioniert werden kann, in der der Schneidschlitz (FT) bezüglich des Verschlusselements (201) offen bleibt, und in einer ausgefahrenen Endposition (PET), in der der Schneidschlitz (FT) bezüglich des Verschlusselements (201) durch das Verschlusselement (201) selbst verschlossen wird;
und
einen Kopf (201B), (201B*), (201B**), (201B***), (201B****), der dem Verschlusselement (201) zugeordnet ist;
wobei der ausgerüstete Arbeitstisch (100) **dadurch gekennzeichnet ist, dass** die obere Fläche (SS), die eine Platte oder einen Stapel von Platten trägt, wenigstens teilweise über dem Kopf (201B), (201B*), (201B**), (201B***), (201B****) des Verschlusselements (201) angeordnet ist, wenn sich das Verschlusselement (201) in der zurückgezogenen Endposition (PRT) befindet.

2. Arbeitstisch (100) mit Ausrüstung nach Anspruch 1, **dadurch gekennzeichnet, dass** die obere Fläche (SS), die eine Platte oder einen Stapel von Platten trägt, komplett über dem Kopf (201B), (201B*), (201B**), (201B***), (201B****) des Verschlusselements (201) angeordnet ist, wenn das Verschlusselement (201) in der zurückgezogenen Endposition (PRT) angeordnet ist.

3. Arbeitstisch (100) mit Ausrüstungnach einem der vorhergehenden Ansprüche, **dadurch gekennzeichnet, dass** der Kopf (201B), (201B*), (201B**), (201B***), (201B****) des Verschlusselements (201), wenn es in der ausgefahrenen Position (PET) angeordnet ist, im Wesentlichen in derselben Ebene angeordnet ist wie die obere Fläche (SS) des Arbeitstisches (100) mit Ausrüstung.

4. Arbeitstisch (100) mit Ausrüstung nach einem der vorhergehenden Ansprüche, **dadurch gekennzeichnet, dass** das Verschlusselement (201) wenigstens teilweise in einem Schlitz (CV) enthalten ist, der an der Innenseite des Arbeitstisches (100) mit Ausrüstung, der mit der oberen Fläche (SS) versehen ist, ausgebildet ist.

5. Arbeitstisch (100) mit Ausrüstung nach Anspruch 4, **dadurch gekennzeichnet, dass** das Verschlusselement (201) komplett in einem Schlitz (CV) enthalten ist, der an der Innenseite des Arbeitstisches (100) mit Ausrüstung, der mit der oberen Fläche (SS) versehen ist, ausgebildet ist.

6. Arbeitstisch (100) mit Ausrüstung nach einem der vorhergehenden Ansprüche, **dadurch gekennzeichnet, dass** das Verschlusselement (201) wenigstens teilweise in einem Streifen (212) enthalten ist, der Teil des Arbeitstisches (100) mit Ausrüstung ist, der mit der oberen Fläche (SS) versehen ist.

7. Arbeitstisch (100) mit Ausrüstung nach Anspruch 6, **dadurch gekennzeichnet, dass** das Verschlusselement (201) komplett in einem Streifen (212) enthalten ist, der Teil des Arbeitstisches (100) mit Ausrüstung ist, der mit der oberen Fläche (SS) versehen ist.

8. Arbeitstisch (100) mit Ausrüstung nach einem der vorhergehenden Ansprüche, **dadurch gekennzeichnet, dass** die Breite (D2) des Kopfs (201B), (201B*), (201B**), (201B***), (201B****) des Verschlusselements (201) breiter ist als der relative Hauptkörper (201A) oder das relative Betätigungsmittel (202).

9. Arbeitstisch (100) mit Ausrüstung nach einem der vorhergehenden Ansprüche, **dadurch gekennzeichnet, dass** die Breite (D2) des Kopfs (201B), (201B*), (201B**), (201B***), (201B****) des Verschlusselements (201) im Wesentlichen gleich der oder breiter als die Breite (D3) des Streifens (212) ist, der das relative Verschlusselement (201) enthält oder die gesamte Verschlussvorrichtung (200), (200A), (200B), (200C), (200D).

10. Arbeitstisch (100) mit Ausrüstung nach einem der vorhergehenden Ansprüche, **dadurch gekennzeichnet, dass** das Verschlusselement (201) aus einer verformbaren elastischen Folie hergestellt ist.

11. Arbeitstisch (100) mit Ausrüstung nach einem der vorhergehenden Ansprüche, **dadurch gekennzeichnet, dass** das Verschlusselement (201) ausschließlich durch mechanische Mittel betätigt wird.

12. Arbeitstisch (100) mit Ausrüstung nach einem der vorhergehenden Ansprüche 1 bis 10, **dadurch gekennzeichnet, dass** das Betätigungsmittel (202) elektropneumatische Mittel aufweist.

13. Arbeitstisch (100) mit Ausrüstung nach einem der vorhergehenden Ansprüche, **dadurch gekennzeichnet, dass** jedes spezifische Verschlusselement (201) nur dann in der entsprechenden zurückgezogenen Position (PRT) angeordnet ist, wenn die beiden folgenden Bedingungen gleichzeitig erfüllt sind:
f1) die Schneidmittel (INC, SC) schneiden eine Platte oder einen Stapel von Platten; und
f2) die Schneidmittel (INC, SC) sind exakt in Übereinstimmung mit dem spezifischen Verschlusselement (201).

14. Schneidmaschine (10) mit einem Sägeschlitten (CRR) mit wenigstens einem Rundmesser (SC), das während der Schnittoperation entlang eines Schneidschlitzes (FT) laufen soll, wobei der Sägeschlitten (CRR) entlang einer Basis zum Führen und Stützen der zu schneidenden Platten geleitet, wobei die Schneidmaschine (10) einen Arbeitstisch (100) mit Ausrüstung nach einem der vorhergehenden Anspruche aufweist.

## Revendications

1. Table d'usinage équipée (100) pour une machine de coupe (10) ; la table d'usinage équipée (100) comprenant :
- une surface supérieure (SS) supportant au moins un panneau ; et
- au moins un dispositif de fermeture (200), (200A), (200B), (200C), (200D) d'une fente de coupe (FT) ; ledit au moins un dispositif de fermeture (200), (200A), (200B), (200C), (200D) de la fente de coupe (FT) comprenant un élément de fermeture (201) de ladite fente de coupe (FT) et des moyens d'actionnement (202) dudit élément de fermeture (201) ; ledit élément de fermeture (201) étant orthogonal à la fente de coupe (FT) elle-même et étant capable d'être positionné dans une position terminale rétractée (PRT), dans laquelle ladite fente de coupe (FT) en correspondance audit élément de fermeture (201) reste ouverte, et dans une position terminale extraite (PET), dans laquelle ladite fente de coupe (FT) en correspondance audit élément de fermeture (201) est fermée par ledit élément de fermeture (201) lui-même ; et
une tête (201B), (201B*), (201B**), (201B***), (201B****) associée audit élément de fermeture (201) ;
la table d'usinage équipée (100) étant **caractérisée en ce que** ladite surface supérieure (SS) supportant un panneau ou un empilement de panneaux est au moins partiellement agencée par-dessus ladite tête (201B), (201 B*), (201B**), (201 B***), (201 B****) dudit élément de fermeture (201) lorsque ledit élément de fermeture (201) est situé dans ladite position terminale rétractée (PRT).

2. Table d'usinage équipée (100) selon la revendication 1, **caractérisée en ce que** ladite surface supérieure (SS) supportant un panneau ou un empilement de panneaux est complètement agencée par-dessus ladite tête (201B), (201B*), (201B**), (201B***), (201B****) dudit élément de fermeture (201) lorsque ledit élément de fermeture (201) est agencé dans ladite position terminale rétractée (PRT).

3. Table d'usinage équipée (100) selon une quelconque des revendications précédentes, **caractérisée en ce que** ladite tête (201B), (201B*), (201B**), (201B***), (201B****) dudit élément de fermeture (201), lorsqu'il est agencé dans sa position extraite (PET), est sensiblement agencée au même niveau que la surface supérieure (SS) de la table d'usinage équipée (100).

4. Table d'usinage équipée (100) selon une quelconque des revendications précédentes, **caractérisée en ce que** l'élément de fermeture (201) est au moins partiellement contenu dans une fente (CV), qui est obtenue sur l'intérieur de la table d'usinage équipée (100) pourvue de la surface supérieure (SS).

5. Table d'usinage équipée (100) selon la revendication 4, **caractérisée en ce que** l'élément de fermeture (201) est complètement contenu dans une fente (CV), qui est obtenue sur l'intérieur de la table d'usinage équipée (100) pourvue de la surface supérieure (SS).

6. Table d'usinage équipée (100) selon une quelconque des revendications précédentes, **caractérisée en ce que** l'élément de fermeture (201) est au moins partiellement contenu dans une bande (212), qui fait partie de la table d'usinage équipée (100) pourvue de la surface supérieure (SS).

7. Table d'usinage équipée (100) selon la revendication 6, **caractérisée en ce que** l'élément de fermeture (201) est complètement contenu dans une bande (212), qui fait partie de la table d'usinage équipée (100) pourvue de la surface supérieure (SS).

8. Table d'usinage équipée (100) selon une quelconque des revendications précédentes, **caractérisée en ce que** la largeur (D2) de la tête (201B), (201B**), (201B***), (2016****) dudit élément de fermeture (201) est plus large que le corps principal relatif (201 A) ou du dispositif d'actionnement relatif (202).

9. Table d'usinage équipée (100) selon une quelconque des revendications précédentes, **caractérisée en ce que** la largeur (D2) de la tête (201B), (201B*), (201B**), (201B***), (201B****) dudit élément de fermeture (201) est sensiblement égale à ou plus large que la largeur (D3) de la bande (212) qui loge l'élément de fermeture relatif (201) ou le dispositif de fermeture entier (200), (200A), (200B), (200C), (200D).

10. Table d'usinage équipée (100) selon une quelconque des revendications précédentes, **caractérisée en ce que** ledit élément de fermeture (201) est fait d'une feuille élastique déformable.

11. Table d'usinage équipée (100) selon une quelconque des revendications précédentes, **caractérisée en ce que** ledit élément de fermeture (201) est exclusivement activé par des moyens mécaniques.

12. Table d'usinage équipée (100) selon une quelconque des revendications précédentes 1 à 10, **caractérisée en ce que** lesdits moyens d'actionnement (202) comprennent des moyens électropneumatiques.

13. Table d'usinage équipée (100) selon une quelconque des revendications précédentes, **caractérisée en ce que** chaque élément de fermeture spécifique (201) est agencé dans sa position rétractée correspondante (PRT) seulement lorsque les deux conditions suivantes sont satisfaites simultanément :
f1) les moyens de coupe (INC, SC) coupent un panneau ou un empilement de panneaux ; et
f2) lesdits moyens de coupe (INC, SC) sont exactement en correspondance à cet élément de fermeture spécifique (201).

14. Machine de coupe (10) comprenant un chariot de scie (CRR) comportant au moins une lame circulaire (SC), qui doit se déplacer, durant l'opération de coupe, le long d'une fente de coupe (FT), ledit chariot de scie (CRR) coulissant le long d'une base pour guider et supporter les panneaux destinés à être coupés ; la machine de coupe (10) comprenant une table d'usinage équipée (100) selon une quelconque des revendications précédentes.
